# EUROPÄISCHE PATENTANMELDUNG

(11) **EP 0 685 312 A1**
(43) Veröffentlichungstag der Anmeldung: **06.12.1995**
(21) Anmeldenummer: 95107958.1
(22) Anmeldetag: 25.05.1995
(51) Int. Cl.: B29C 47/08, B29C 47/68

(54) **Plattensiebwechsler**

(30) Priorität: 01.06.1994 DE 4419284
(71) Anmelder: GNEUSS KUNSTSTOFFTECHNIK GmbH, D-32549 Bad Oeynhausen (DE)
(72) Erfinder: Gneuss, Detlef, D-32549 Bad Oeynhausen (DE)
(74) Vertreter: Grosse, Dietrich, Dipl.-Ing.

(57) **Zusammenfassung**

Die Erfindung betrifft eine Filtervorrichtung für Kunststoffschmelzen, die in Ausnehmungen einer schwenkbaren Schwinge oder eines verschiebbaren Schiebers austauschbare Siebaufsätze aufweist, die in den Schmelzekanal einbringbar und vermittels von Dichtungen abdichtbar sind. Um bei relativ einfachem Aufbau die Montage zu erleichtern und ggfs. eine Steuerung oder Regelung des von den Dichtungen bewirkbaren Anpreßdruckes zu erreichen, werden als Dichtungen 13, 14 ringartige Dichtkörper aus Metall, vorzugsweise Edelstahl, gewählt, die einen geschlossenen Hohlraum enthalten, so daß im Querschnitt eine geschlossene Wandung entsteht, die eine dem Hohlraum entsprechende Fläche umschließt. Der geschlossene Hohlraum der Dichtungen 13, 14 wird mit einem Stoff ausgefüllt, dessen thermischer Ausdehnungskoeffizient den des Materiales des Dichtkörpers überschreitet. Ein solcher Stoff kann beim Zimmertemperatur fest, flüssig oder bereits, vorzugsweise unter Druck stehend, gasförmig sein, und ist bei Betriebstemperatur vorzugsweise flüssig bzw. aufgeschmolzen, oder gasförmig, bspw. verdampft. Es besteht auch die Möglichkeit der Verwednung fester Kunststoffe, die bei der Betriebstemperatur aufgeschmolzen oder wenigstens so weit erweicht sind, daß sie auftretende Druckkräfte bereits wie Flüssigkeiten weitergeben. Erreicht wird hiermit, daß der Einbau der Dichtungen bei Zimmertemperatur oder mindestens gegenüber der Arbeitstemperatur verringerter relativ leicht erfolgen kann, bei Betriebstemperatur jedoch die größere thermische Dehnung des Füllstoffes die Dichtungen im wesentlichen in axialer Richtung dehnt und damit deren Auflagekraft auf den Dichtflächen erhöht. Der Effekt kann durch vorzugsweise gesteuerte Fremdheizung und/oder durch verschiebbare Verdrängerkörper gesteigert und zu Steuer- sowie Regelvorgängen genutzt werden.

## Beschreibung

Die Erfindung betrifft eine Filtervorrichtung für Kunststoffschmelzen mit in Ausnehmungen einer zwischen zwei Platinen kraftbetrieben verschwenkbaren Schwinge oder eines kraftbetrieben verschiebbaren Schiebers angeordneten Siebeinsätzen, von denen jeweils einer mit einem die Platinen durchdringenden, beidseitig mit gegen die Schwinge bzw. den Schieber geführten Dichtungen ausgestatteten Schmelzekanal fluchtet.

Derartige Plattensiebwechsler werden verbreitet zum Filtern von Kunststoffschmelzen verwendet, und für einen durchzuführenden Siebwechsel läßt sich die Schwinge bzw. der Schieber bspw. mittels eines Druckmittelantriebes in kürzester Zeit umlegen, so daß ein den Plattensiebwechsler speisender Extruder durchlaufen kann und es nicht erforderlich ist, ihn für Siebwechsel stillzusetzen. Als problematisch jedoch haben sich die den Schmelzekanal gegen die Schwinge bzw. deren Siebeinsätze abdichtenden Dichtungen erwiesen, die ein zuverlässiges bzw. absolutes Abdichten der Schwinge auch bei hohen Schmelzedrucken von bis 400 bar bei hohen Schmelzetemperaturen und niedrigviskoser Schmelze erlauben sollen. Zudem soll ein Betrieb mit niedrigstem Verschleiß der Dichtflächen erfolgen, so daß auch nach häufigen Siebwechselvorgängen eine praktisch absolute Abdichtung noch gesichert ist.

Zwar ist der Einsatz elastischer Dichtungen versucht worden, sie haben jedoch infolge ihrer geringen Standfestigkeit bei den angegebenen hohen Temperaturen nur geringe Verbreitung gefunden.

Es sind aus Stahl bestehende Dichtringe eingesetzt worden, die zwar sich als relativ verschleißfest erweisen, deren Dichtleistung aber schon bei geringfüfigen Beschädigungen der Dichtfläche bzw. des Dichtsitzes nachlassen, so daß verbreitet weichere bzw. zähere Metalle wie bspw. Aluminium-Bronzen verwendet werden, die sich geringen Unebenheiten leichter anpassen.

Der eigentliche Anpreßdruck läßt sich bspw. durch Einstellschrauben bzw. -gewinde vorgeben, es ist auch möglich, Federn zu verwenden oder zwischenzuschalten, um einen möglichst konstanten Anpreßdruck zu erreichen.

Aus der DE-PS 19 19 269 ist eine hydraulische Anstellung bekannt, bei der entlang des Umfanges des Dichtringes verteilt hydraulisch betätigte Stößel zur Auswirkung auf den Dichtring gelangen, und aus der DE-PS 30 43 217 ist ein Dichtkörper abstützender, vermittels Metallfaltenbälge abgeschlossener hydraulischer Ringraum bekannt.

Es hat sich jedoch gezeigt, daß zwar eine Einstellbarkeit des Auflagedruckes auf gewünschte Werte sich als vorteilhaft erweist und eine Anpassung an die Temperatur, den Druck und die Viskosität der zu filternden Kunststoffschmelze zuläßt; die Einstellung eines Auflagedruckes vermittels von Schrauben, Stellgewinden oder dergleichen erweist sich jedoch als umständlich, während druckmittelangestellte Dichtungen eines relativ hohen Aufwandes bedürfen.

Die Erfindung geht daher von der Aufgabe aus, der Gattung entsprechende Filtervorrichtungen zu schaffen, die mit Dichtungen ausgestattet sind, die im Betriebe mit hoher Verläßlichkeit arbeiten und eine lange Standzeit aufweisen, deren Montage jedoch sich unproblematisch zeigt, und die eine Anpassung an die jeweiligen Arbeitsbedingungen erlauben.

Gelöst wird diese Aufgabe durch die Merkmale des Patentanspruches 1. Sie erlauben den Einbau von Dichtungen in relativ entspanntem Zustande, so daß die Montage keine wesentlichen Schwierigkeiten bietet und nur geringe Spannkräfte von der Montage her aufzubringen sind, während durch die Erhitzung im Betriebe der in ihrem Hohlraum auftretende Druck durch die thermisch Dehnung des Füllmediums derart ansteigt, daß zumindest die der Schwinge zugewandte Stirnfläche sich unter Einwirkung des Druckes vorschiebt bzw. vorwölbt und sich fest und damit sicher dichtend auf die Schwinge bzw. den Schieber und/oder Stirnflächen des Siebeinsatzes auflegt.

Weitere, die Erfindung weiterbildende und zweckmäßige Merkmale sind in den Unteransprüchen gekennzeichnet.

Im einzelnen sind die Merkmale der Erfindung anhand der Beschreibung von Ausführungsbeispielen in Verbindung mit diese darstellenden Zeichnungen erläutert. Es zeigen hierbei:
- Figur 1: die Seitenansicht eines Siebwechslers,
- Figur 2: eine im Bereiche des Schmelzekanales aufgebrochene Ansicht des Plattensiebwechslers der Fig. 1,
- Figur 3: eine Dichtung des Plattensiebwechslers der Fig. 1 und 2 im abgebrochenen Längsschnitt,
- Figur 4: in gleicher Darstellung eine abgeänderte Ausführung einer Dichtung für Plattensiebwechsler nach Fign. 1 und 2, und
- Figur 5: eine gleichartig dargestellte weiter variierte Ausführung.

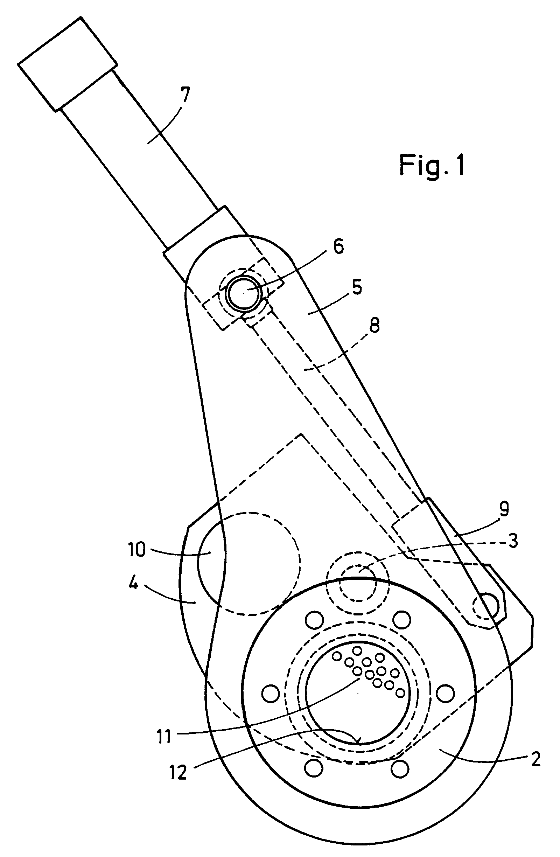

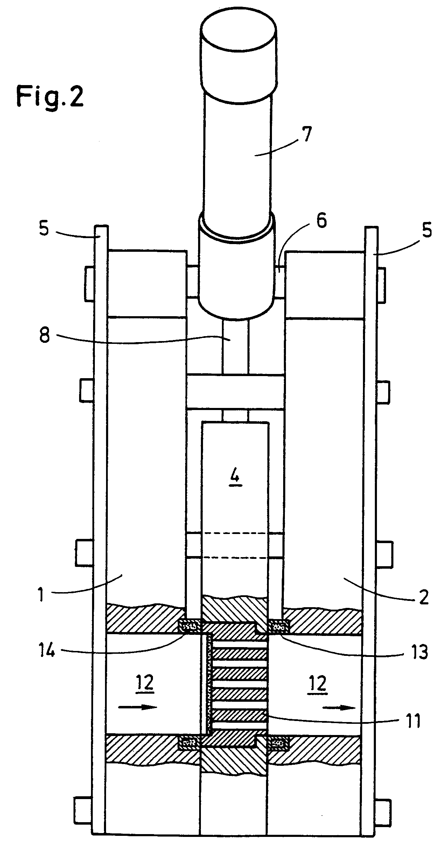

In den Fign. 1 und 2 ist in der Seiten- und der Vorderansicht ein Plattensiebwechsler dargestellt, der eine zwischen zwei Platinen 1 und 2 auf einer Achse 3 gehaltene und um sie verschwenkbare Schwinge 4 aufweist. Flankenbleche 5 tragen einen um Bolzenansätze 6 schwenkbaren, als Kraftantrieb für die Schwinge vorgesehenen Druckmittelzylinder 7, dessen Kolbenstange 8 mittels einer Gabel 9 an die Schwinge 4 angelenkt ist.

Die Schwinge 4 weist zwei im wesentlichen zylindrische Ausnehmungen 10 zur Aufnahme von Siebeinsätzen 11 auf, und eine der beiden Ausnehmungen 10 steht in den Fign. 1 und 2 fluchtend vor dem die Platinen 1 und 2 durchdringenden Schmelzekanal 12. In Erweiterungen dieses Schmelzekanales sind Dichtungen 13 und 14 eingelassen, welche den Schmelzekanal 12 der Platinen 1 und 2 gegen die beiden Flanken der Schwinge 4, gegebenenfalls auch direkt gegen Stirnflächen der Siebeinsätze 11, abdichten sollen.

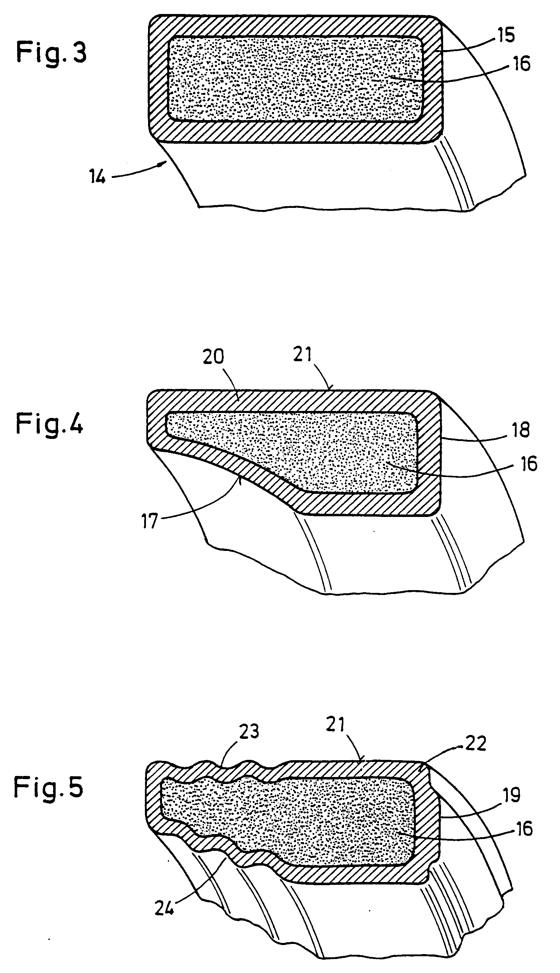

Die Dichtung 14 ist vergrößert, geschnitten und im unteren Bereiche abgebrochen perspektivisch in Fig. 3 dargestellt. Diese Fig. läßt erkennen, daß die Dichtung einen Dichtkörper 15 aufweist, der als kurzer Hohlzylinder mit dem Profil eines Rechteckrohres ausgebildet ist, dessen Inneres mit einem Stoff 16 gefüllt ist, der zumindest bei der Arbeitstemperatur der Dichtung 14 flüssig ist, und der einen höheren Ausdehnungskoeffizienten aufweist als das Metall des als Hohlkörper ausgeführten Dichtkörpers 15 der Dichtung 14. Hiermit wird erreicht, daß beim Einsetzen der Dichtung deren aus Metall, bspw. aus Edelstahl, bestehender Dichtkörper 15 praktisch entspannt ist, und daß bei der Erwärmung durch die hindurchfließende Kunststoffschmelze der Dichtkörper inklusive des ihn füllenden Stoffes thermisch expandiert und, da der im Inneren befindliche Stoff, bspw. eine Flüssigkeit, einen höheren Ausdehnungskoeffizienten aufweist als der eigentliche Dichtkörper, so wird dieser von innen, durch seine stärker expandierende Füllung, zusätzlich ausgedehnt und damit verformt. Das bedeutet aber, daß beim Zusammenbau im noch nicht expandierten Zustande der Dichtungen 13 und 14 der Einbau der Dichtungen relativ einfach ist, da deren Ausdehnung und damit deren beim Einbau auftretende Spannung noch nicht den im Betriebe zu erzielenden Anpreßdrucken entspricht. Im Betriebe aber und nach der thermischen Ausdehnung bzw. Verformung legt sich die der Schwinge zugewandte Stirnfläche fest und dichtend auf diese.

Der Effekt der Steigerung des Anpreßdruckes läßt sich durch gesonderte Ausgestaltung des Dichtkörpers noch wesentlich steigern. So kann bspw. der in der Schmelze herrschende Druck zusätzlich herangezogen werden, indem gemäß Fig. 4 der Schmelze eine relativ große, bspw. angenähert konische, Flanke 17 geboten wird, auf welche die Schmelze axial wirkende Komponenten aufweisende Kräfte auszuüben vermag, welche die Stirnfläche 18 zusätzlich gegen die Schwinge 4 bzw. einen Schieber anpressen.

Als besonders empfehlenswert hat es sich gezeigt, Formen, wie bspw. die in Fig. 5 angedeutete, zu verwenden, bei denen der äußere, ohnehin durch die Platinen 1, 2 abgestützte Mantel 21 des Dichtkörpers 22 zur Gewinnung weiteren Volumens für den sich thermisch dehnenden Stoff zumindest bereichsweise dünn ausgeführt wird, freistehende Umfangsbereiche jedoch stärker ausgeführt werden, um eine ausreichende Stütze gegen ungewollte Verformungen zu erhalten. Da als Verformung insbesondere eine Ausdehnung in axialer Richtung gewünscht wird, kann es sich empfehlen, Bereiche 23, 24 dünner auszuführen als ihre Umgebung und gegebenenfalls noch wellenförmig auszubilden, um die in axialer Richtung zu bewirkende Dehnung zu erleichtern. Ebenso ist es aber auch möglich, bspw. die Randbereiche der auf einer Schwinge bzw. einem Schieber aufliegenden Stirnplatte dünner und gegebenenfalls gewellt auszuführen, um derart eine Steigerung der Elastizität in axialer Richtung nach Art vorrückender Membranen zu erhalten, die durch ein Scharnier umgeben sind. Hierdurch wird der Effekt begünstigt, die dreidimensionale thermische Ausdehnung des Stoffes 16 für einen eindimensionalen translatorischen Vorschub der Stirnfläche 18, 19 zu nutzen.

Die Auflagefläche des Dichtkörpers 22 auf der Schwinge, dessen Stirnfläche 19, ist durch Vorstehen eines relativ schmalen Ringbereiches verkleinert, so daß diese Auflage mit einer hohen Flächenpressung erfolgt, wobei eine Steigerung des Schmelzedruckes auch eine Erhöhung der Andruckkräfte bewirkt. Insbesondere bei der Verwendung von Schmelzen hohen Druckes oder zumindest hoher Druckspitzen jedoch, bspw. bis 2000 bar bei Spritzgießmaschinen, kann es sich als zweckmäßig erweisen, zur Begrenzung des Anpreßdruckes die auf der Schwinge bzw. dem Schieber aufliegenden Fläche, die Stirnfläche 19, groß, bspw. größer als den Querschnitt des Dichtkörpers 22, auszuführen, um durch eine große Auflagefläche unerwünscht hohe Flächenpressungen zu vermeiden.

Der Dichtkörper kann auch weiterhin relativ groß ausgeführt werden, um ein entsprechend großes Innenvolumen zu erhalten. Bewährt hat es sich aber auch, bspw. die entwickelten Druckkräfte direkt als in der Füllung auftretenden Druck zu messen oder indirekt als Temperatur anzugeben. Hier lassen sich Regelvorgänge anschließen, insbesondere, wenn in den Bereich der Dichtung gebrachte elektrische Heizungen oder an oder in deren Wandung integrierte Heizelemente bzw. Bänder oder dergleichen eine gezielte zusätzliche Erhitzung ermöglichen, die ihrerseits wiederum es gestattet, die gewünschten abdichtenden Auflagedrucke zu erreichen. Bei einer thermischen Steuerung kann es sich auch empfehlen, den Mantel der Dichtung gegen die sie aufnehmende Platine durch eine Isolierschicht zu schützen, um die abfließende Wärme zu begrenzen. Es hat sich aber auch bewährt, insbesondere in Verbindung mit den in der Dichtung auftretenden Druck erfassenden Druckfühlern, den im die Dichtung füllenden Stoff auftretenden Druck und damit die von der Stirnplatte der Dichtung ausgeübten Kräfte mittels eines Verdrängerkörpers zu steuern oder zu regeln, der einstellbar in den dem sich thermisch dehnenden Stoff zur Verfügung stehenden Innenraum eintritt und diesen zu verringern bzw. zu begrenzen vermag.

Als Stoff größeren thermischen Ausdehnungskoeffizienten können Metalle oder Metallegierungen verwendet werden, die bei der Temperatur der zu filternden Kunststoffschmelze aufgeschmolzen sind. Andererseits können aber auch beliebige weitere organische oder anorganische Verbindungen, Elemente oder Gemische bzw. Lösungen, verwendet werden, wenn sie bei der Betriebstemperatur zumindest flüssig sind und bei dieser Temperatur sich als alterungsbeständig erwiesen und sich nicht zersetzen. Andererseits können durchaus auch Stoffe gewählt werden, die bspw. bereits bei Raumtemperatur flüssig sein können, gegebenenfalls aber auch feste Körper sind, und die bei ihrer Erhitzung über die Flüssigkeitsphase hinaus verdampfen, so daß zusätzlich zur thermischen Dehnung noch der sich aufbauende Dampfdruck nutzbar ist, sowie auch bei Umgebungstemperatur gasförmig vorliegende, vorzugsweise bereits unter Druck stehende Gase einsetzbar sind. Im Prinzip ist auch der Einsatz von hinsichtlich ihres thermischen Ausdehnungskoeffizienten sich als günstig erweisenden organischen Kunststoffen möglich, deren Aggregatzustand sich nicht ändert, die also bspw. bereits bei der Umgebungstemperatur flüssig sind und im Arbeitsbereich flüssig bleiben oder sowohl bei Umgebungstemperatur als auch im Arbeitsbereich sich als quasi-feste Körper erweisen, ebenso wie im oder bereits unterhalb des Arbeitsbereiches schmelzende und/oder verdampfende Kunststoffe anwendbar sind.

Als thermisch sich stark dehnende Stoffe können bspw. verwendet werden: Glycerin, aufschmelzende Kunststoffe, aber auch im oder unterhalb des Arbeitsbereiches verdampfende organische oder anorganische Flüssigkeiten. Auch Legierungen wie bspw. Wood'sches Metall können verwendet werden, wenn auch Metalle meist keinen wünschenswert großen thermischen Ausdehnungskoeffizienten aufweisen. Quecksilber dürfte seiner Toxizität wegen ausfallen.

Insbesondere bei der Möglichkeit eines kraftbetriebenen einstellbaren Verdrängerkörpers und/oder einer zusätzlichen Beheizung, die vorteilhaft elektrisch gestaltet sein kann, jedoch nicht hierauf beschränkt ist, kann eine Regelvorrichtung aufgebaut werden, und die jeweiligen Druckwerte oder die für diese stehenden Temperaturwerte können Prozeßrechnern zur Verarbeitung zugeführt werden. Im Falle solcher zusätzlichen Beheizung kann es sich als zweckmäßig erweisen, zumindest Teile der Dichtungen thermisch zu isolieren, bspw. den äußeren Mantel gegen die die Dichtung aufnehmenden Platinen.

## Patentansprüche

1. Filtervorrichtung für Kunststoffschmelzen mit in Ausnehmungen einer zwischen zwei Platinen kraftbetrieben verschwenkbaren Schwinge oder eines kraftbetrieben verschiebbaren Schiebers angeordneten Siebeinsätzen, von denen jeweils einer mit einem die Platinen durchdringenden, beidseitig mit gegen die Schwinge bzw. den Schieber geführten Dichtungen ausgestatteten Schmelzekanal fluchtet,
**dadurch gekennzeichnet,**
daß mindestens eine der Dichtungen (13, 14) einen aus Metall bestehenden Dichtkörper (15, 20, 22) aufweist, der einen geschlossenen Hohlraum umschließt, der mit einem Stoff (16) gefüllt ist, dessen thermischer Ausdehnungskoeffizient den des Materiales des Dichtkörpers überschreitet.

2. Filtervorrichtung nach Anspruch 1,
**dadurch gekennzeichnet,**
daß der den Hohlraum des Dichtkörpers (15, 20, 22) erfüllende Stoff (16) ein bei der Betriebstemperatur aufgeschmolzenes Metall bzw. Metallegierung ist.

3. Filtervorrichtung nach Anspruch 1,
**dadurch gekennzeichnet,**
daß der in den Hohlraum des Dichtkörpers (15, 20, 22) eingebrachte Stoff ein Element oder eine organische oder anorganische Verbindung, ein Gemisch und/oder eine Legierung ist, die zumindest bei der Betriebstemperatur aufgeschmolzen sind.

4. Filtervorrichtung nach Anspruch 1,
**dadurch gekennzeichnet,**
daß der in den Hohlraum des Dichtkörpers (15, 20, 22) der Dichtung (13, 14) eingebrachte Stoff bei Zimmertemperatur als fester Körper bzw. ein festes Gemisch, als Flüssigkeit oder vorzugsweise unter Druck stehendes Gas und im Temperaturbereiche des Betriebszustandes oder unter diesem im gasförmigen Zustand vorliegt.

5. Filtervorrichtung nach einem der Ansprüche 1 bis 4,
**dadurch gekennzeichnet,**
daß Dichtungen (13, 14) auf deren Temperatur ansprechende Thermofühler und/oder auf deren Innendruck ansprechende Druckfühler zugeordnet sind.

6. Filtervorrichtung nach einem der Ansprüche 1 bis 5,
**dadurch gekennzeichnet,**
daß den Dichtungen (13, 14) sie berührende oder in deren Dichtkörper integrierte Heizelemente zugeordnet sind.

7. Filtervorrichtung nach Anspruch 6,
**gekennzeichnet durch**
elektrische Widerstands- und/oder Induktionsheizung.

8. Filtervorrichtung nach mindestens einem
der Ansprüche 5 bis 7,
**dadurch gekennzeichnet,**
daß Heizvorrichtungen als Stellvorrichtungen einer Druck- oder Temperaturregelung vorgesehen sind.

9. Filtervorrichtung nach mindestens einem
der Ansprüche 6 bis 8,
**dadurch gekennzeichnet,**
daß Oberflächenbereiche der Dichtkörper (15, 20, 22) gegen Wärmeübergang isoliert sind.

10. Filtervorrichtung nach mindestens einem
der Ansprüche 1 bis 9,
**dadurch gekennzeichnet,**
daß die sich auf die Schwinge (4) bzw. den Schieber auflegende Stirnfläche (18) der Dichtungen (13, 14) mit gegenüber deren Grundfläche verringerter Fläche ausgeführt ist.

11. Filtervorrichtung nach mindestens einem
der Ansprüche 1 bis 9,
**dadurch gekennzeichnet,**
daß die sich auf die Schwinge (4) bzw. den Schieber auflegende Stirnfläche (19) der Dichtungen (13, 14) mit gegenüber deren Grundfläche vergrößerter Fläche ausgeführt ist.

12. Filtervorrichtung nach mindestens einem
der Ansprüche 1 bis 11,
**dadurch gekennzeichnet,**
daß der die sich auf die Schwinge (3) bzw. den Schieber auflegende Stirnfläche der Dichtungen (13, 14) umziehende Randbereich derselben mit verringerter Wandstärke und vorzugsweise ausgeformter Wellung ausgeführt ist.

13. Filtervorrichtung nach mindestens einem
der Ansprüche 1 bis 12,
**dadurch gekennzeichnet,**
daß Bereiche (23, 24) des Außen- und/oder Innenmantels von Dichtkörpern (15, 20, 22) mit gegenüber der übrigen verringerter Wandstärke und/oder mit einer eingeformten Wellung ausgeführt sind.

14. Filtervorrichtung nach mindestens einem
der Ansprüche 1 bis 13,
**dadurch gekennzeichnet,**
daß Dichtungen (13, 14) verstellbare, auf den in den Hohlraum der Dichtkörper (15, 20, 22) eingebrachten Stoff (16) einwirkende, verstellbare Verdrängerkörper aufweisen.
